# EUROPÄISCHE PATENTSCHRIFT

(11) **EP 0 778 245 B1**
(45) Veröffentlichungstag und Bekanntmachung des Hinweises auf die Patenterteilung: **17.06.1998**
(21) Anmeldenummer: 96117244.2
(22) Anmeldetag: 28.10.1996
(51) Int. Cl.: C02F 1/62, C02F 1/48, C02F 9/00, C02F 1/72, B01D 35/06, B03C 1/00, B03C 1/015

(54) **Verfahren zur Abtrennung von Schwermetallen aus Abwasser**
Method for removing heavy metals from waste water
Procédé pour l'élimination de métaux lourds d'eaux usées

(30) Priorität: 07.12.1995 DE 19545660
(43) Veröffentlichungstag der Anmeldung: 11.06.1997
(73) Patentinhaber: Forschungszentrum Karlsruhe GmbH, 76133 Karlsruhe (DE)
(72) Erfinder: Franzreb, Matthias, Dr., 76185 Karlsruhe (DE); Kampeis, Percy, 76131 Karlsruhe (DE); Höll, Wolfgang, Dr., 76275 Ettlingen (DE); Eberle, Siegfried, Prof. Dr., 76344 Eggenstein-Leopoldshafen (DE)

(56) Entgegenhaltungen:
- DE-A- 2 363 291
- DE-A- 3 146 953

## Beschreibung

Die Erfindung betrifft ein Verfahren zur Abtrennung von Schwermetallen aus Abwasser gemäß dem ersten Patentanspruch.

Schwermetallhaltige Abwässer werden in der Technik derzeit meist durch Fällung der Schwermetalle mit Hilfe von Natronlauge, Kalkmilch oder Soda und anschließender Abtrennung der entstehenden Schwermetallhydroxide gereinigt. Die Abtrennung der ausgefällten Hydroxide erfolgt gewöhnlich mittels Sedimentation, Flotation oder Sandfiltration. Oftmals reichen diese Reinigungsschritte jedoch zur sicheren Einhaltung der vorgeschriebenen Einleitungsgrenzwerte nicht nicht aus.

Die Anwendung magnetischer Filtrationsverfahren zur Abtrennung der Schwermetallhydroxide hat sich bisher technisch noch nicht durchgesetzt, denn die Schwermetallhydroxide als solche weisen sehr geringe Suszeptibilitätswerte auf. Sie zeigen je nach dem gefällten Schwermetall allenfalls schwach paramagnetisches oder sogar diamagnetisches Verhalten.

Zur Verbesserung der magnetischen Eigenschaften gefällter Schwermetallhydroxide wurden bisher zwei Ansätze vorgeschlagen:
- ◆: Die Zudosierung von Magnetit in Kombination mit einem Flockungsmittel wie z. B. Eisen(III)-Verbindungen oder Aluminiumsalzen,
- ◆: den Einschluß der Schwermetalle in während der Fällung gebildete Ferrite.

Die Veröffentlichung in Wat. Res. Vol. 20 No. 5, pp. 537-545, 1986 betrifft den ersten dieser beiden Ansätze. Danach wird Wasser, das 5 bis 20 mg Cadmium pro Liter enthält, mit der 1- bis 5-fachen Menge an Eisen(III)-Chlorid als Flockungsmittel versetzt, wonach die 2,5- bis 100-fache Menge an Magnetit zugegeben wird. Der Niederschlag wird anschließend magnetisch gefiltert. Ein Versuch ohne FeCl₃-Zugabe erbrachte ein unbefriedigendes Ergebnis.

Es gibt eine Reihe von Verfahrensvarianten, die vom zweiten Ansatz ausgehen.

Nach der DE 31 46 953 A1 wird schwermetall-, insbesondere eisenhaltiges Abwasser solange mit einem reduzierenden Mittel versetzt, bis sich ein bestimmtes Verhältnis von Fe(II)- zu Fe(III)-Ionen einstellt. Dieses Verhältnis soll offensichtlich dem Verhältnis von Fe(II) zu Fe (III) in Magnetit entsprechen. Anschließend werden die Schwermetalle einschließlich Eisen mit einem alkalischen Medium ausgefällt. Der Niederschlag wird magnetisch filtriert.

In den AIChE Symposium Series des American Institute of Chemical Engineers mit dem Titel "Separation of Heavy Metals and Other Trace Contaminants", **243** Volume 81 (1985) pp. 133-138 wird ein abgewandeltes Verfahren beschrieben. Schwermetallhaltiges Wasser wird mit Eisen(II)-Sulfat in 4- bis 12-fachem Überschuß - bezogen auf die Konzentration der einzelnen Schwermetallionen - versetzt. Daneben wird durch Aufschlämmen von Magnetit eine wäßrige Suspension hergestellt, in die anschließend das schwermetall- und eisen(II)sulfathaltige Wasser gegossen wird. Dann wird der pH-Wert der entstehenden Lösung durch Zugabe Natronlauge auf 5 bis 13 eingestellt. In die Lösung wird Luft eingeleitet, um die Niederschläge zu oxidieren. Nach 30 Minuten fallen die Schwermetalle als Ferritschlamm aus. Der Schlamm wird mit Hilfe eines magnetischen Feldes filtriert.

Ein weiteres Verfahren wird in Wat. Sci. Tech. Vol 23, Kyoto, pp. 1893-1900, 1991 beschrieben. Zum schwermetallhaltigen Abwasser wird Eisen(II)-Sulfat zugegeben. Das molare Verhältnis von Eisen zu Schwermetall (II) soll hier zwischen 10:1 und 20:1 betragen. Der pH-Wert wird dann auf 9 bis 11 eingestellt. Danach wird die Lösung auf 65° C erwärmt. Wie aus einer nachfolgend angegebenen Veröffentlichung hervorgeht, wird das Erwärmen der Lösung als Voraussetzung für die Bildung von Magnetit angesehen. Wiederum findet eine Oxidation des Niederschlags durch Einleiten von Luft statt, die dann beendet wird, wenn das Oxidations-/Reduktionspotential (Redox-Potential) von -800 mV auf 0 mV gestiegen ist. Damit werden schwarze Ferrit-Kristalle erhalten, bei denen die Schwermetalle im Kristallgitter eingebaut sind.

In der Veröffentlichung findet sich kein Hinweis darauf, gegen welche Referenzelektrode das angegebene Potential gemessen wurde. Wegen des Anfangswerts von -800 mV, der vom später durchgeführten Verfahren unabhängig ist, kann jedoch angenommen werden, daß es sich um eine Kalomel-Referenzelektrode handelte. Mit dieser Annahme ergibt eine Umrechnung der beiden Potentialangaben auf eine Silber/Silberchlorid-Referenzelektrode die Werte -763 mV für -800 mV und 37 mV für 0 mV. Aus dem Anstieg des Redox-Potentials während des Verfahrensablaufs um 800 mV kann außerdem geschlossen werden, daß die Oxidation des Niederschlags vollständig beendet wird.

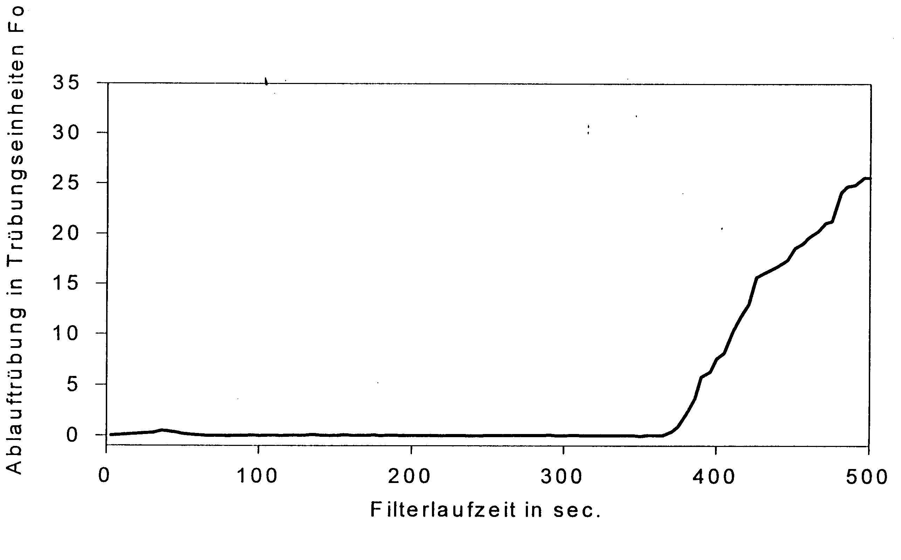

Daß das Redox-Potential gegen eine Kalomel-Referenzelektrode während der Durchführung dieses Verfahrens von ca. -800 mV bis auf ein plateauartiges Endpotential von ca. 0 mV ansteigt, kann aus Fig. 4 der Veröffentlichung "The Formation of the Oxidized Fe₃O₄-Fe₂TiO₄ Solid Solution by the Air Oxidation of the Aqueous Suspension", von T. Katsura, Y. Tamaura und G. Sun Chyo in BULLETIN OF THE CHEMICAL SOCIETY OF JAPAN, Vol 52 (1), 96-100 (1979) ersehen werden.

Die Verfahren nach beiden Ansätzen besitzen den Nachteil, daß im Vergleich zu der zu entfernenden Schwermetallfracht große Mengen an Eisenverbindungen (Magnetit und/oder Eisen(II)sulfat) zudosiert werden müssen. Diese Eisenverbindungen sind im Verhältnis zu den im Abwasser enthaltenen Schwermetallen in mehrfachem Überschuß einzusetzen. Dadurch erhöht sich die entstehende Schlammenge stark, wodurch sich die Deponierung der Fällprodukte wesentlich verteuert. Als Ausweg bleibt bei Verwendung von Magnetit eine möglichst vollständige Rückführung innerhalb des Prozesses. Die Rückführung ist jedoch mit zusätzlichem Aufwand und Chemikalieneinsatz verbunden, weil zuvor die Schwermetalle wieder abgetrennt werden müssen. Im Falle der Ferrite ist eine Rückführung nicht möglich. Ein weiteres Problem ist, daß das Prozeßwasser zusätzlich mit den nicht fällbaren, in Lösung verbleibenden Anteilen der Eisenverbindungen beladen wird, wodurch sich weitere Probleme ergeben können.

Eine allgemeine Beschreibung der Verhältnisse bei der Fällung von Eisenverbindungen findet sich im Bulletin of the Chemical Society of Japan, Vol. 47(7) 1646 - 1650 (1974). Danach bildet sich Magnetit (Fe₃O₄) durch Luftoxidation von ausgefälltem Fe(OH)₂. Die Fe(OH)₂-Fällung bildet sich ihrerseits dann, wenn eine Lösung von Eisen(II)sulfat mit einer überstöchiometrischen Menge an Natronlauge versetzt wird, so daß sich ein resultierender pH-Wert von über 10 ergibt. Das gefällte Fe(OH)₂ läßt sich anschließend in Magnetit umwandeln, wenn die Suspension des Niederschlags 90 min. lang mit Luft oxidiert und zugleich auf 70° C (besser bis zu 85° C) erhitzt wird. Unterhalb von 40° C sollen sich gemäß dieser Veröffentlichung nur geringe Magnetitanteile bilden. Das Erwärmen der Lösung scheint demnach für die Magnetitbildung unverzichtbar zu sein. Während des Erhitzens und Einleitens von Luft sinkt der pH-Wert ab; die Magnetitbildung setzt erst ein, wenn der pH-Wert auf 6,5 abgesunken ist. Der Prozeß muß vier Stunden lang fortgeführt werden, um das Fe(OH)₂ in Magnetit und einen kleinen Anteil von FeOOH umzuwandeln, wobei sich der pH-Wert auf 3,7 erniedrigt. Die Mitfällung von anderen Ionen, insbesondere von Schwermetallionen, wird in der Veröffentlichung nicht angesprochen. Die Angabe praktischer Einsatzmöglichkeiten der dargestellten Ergebnisse fehlt völlig. Das Schwergewicht der Arbeit liegt in der Aufklärung der Fällungsbedingungen und der Bestimmung der Kristallstruktur der Fällprodukte.

Die Doktorarbeit von Dipl.-Ing. Sang-ki Chol, Technische Universität Hamburg-Harburg, 1993, betrifft die Eliminierung von Schwermetallen aus Abwässern durch Ausfällung mit künstlich hergestelltem Magnetit. Es wird über Versuche zur Fällung verschiedener Schwermetallionen berichtet, bei denen eine Lösung (1 l) von je 10 mg/l verschiedener Schwermetallionen hergestellt wurde. Die Lösung wurde mit 8 ml Magnetitschlamm versetzt und mit Hilfe von 0,5-molarer Natronlauge unterschiedliche pH-Werte eingestellt. Magnetit lag im Überschuß vor. Unter der Lösung wurde ein Magnet angeordnet und der Niederschlag untersucht. In die Lösung wurde keine Luft eingeleitet. Ferner wurde nicht die Reaktion selbst, sondern das jeweils entstehende Fällungsprodukt untersucht.

Der Magnetitschlamm wurde gemäß dieser Veröffentlichung in der folgenden Weise hergestellt: Durch Zugabe von FeSO₄ · 7 H₂O zu verdünnter Schwefelsäure wurde eine 0,5 M FeSO₄-Lösung hergestellt, deren pH-Wert unter 3 lag. Hierdurch konnte die Oxidation des zweiwertigen Eisens verhindert werden. Zu dieser Lösung wurde ohne Rühren 1 M NaOH zugegeben. Die resultierende Mischung wurde mindestens eine Stunde gerührt.

Der Erfindung liegt die Aufgabe zugrunde, ein Verfahren vorzuschlagen, mit dessen Hilfe gelöste Schwermetalle wirksam abgetrennt werden können, das jedoch eine erheblich geringere Zugabe von Eisenverbindungen erforderlich macht. Der Aufwand für eine Deponierung der Fällprodukte oder eine Rezyklierung der Eisenverbindungen, insbesondere des Magnetits, soll hierdurch erheblich vermindert werden.

Die Aufgabe wird durch das im ersten Patentanspruch beschriebene Verfahren gelöst. Die weiteren Ansprüche geben bevorzugte Ausführungsformen des Verfahrens an.

Erfindungsgemäß wird die Suspension der ferri- und ferromagnetischen Partikel, z. B. eine Magnetit-Suspension, nicht in dem gesamten Abwasservolumen erzeugt, sondern lediglich in einem Teilvolumen. Das Teilvolumen soll 0,5 bis 20 Vol.-% des gesamten Abwasservolumens betragen. Besonders bevorzugt wird ein Teilvolumen von ca. 2 bis 5 Vol-%. In diesem Teilvolumen werden mit Hilfe der folgenden Verfahrensschritte feinste suspendierte ferri- und ferromagnetische Partikel hergestellt.

Zur Herstellung der suspendierten ferri- und ferromagnetischen Partikel wird in dem Teilvolumen des Abwassers zuerst ein Eisen(II)-Salz gelöst. Das Anion des Eisensalzes ist nahezu beliebig, sofern eine ausreichende Löslichkeit gegeben ist; gut geeignet ist Eisen-(II)-Sulfat. Die Menge des Eisen(II)-Salzes kann um Größenordnungen geringer sein als beim Stand der Technik. In jedem Fall kann das Verhältnis der Konzentrationen von Eisen und Schwermetall unter 1 gehalten werden, während es bei den bekannten Verfahren meist bei 10 bis 100 liegt. Bei üblichen Abwässern, z. B. aus Galvanikprozessen, liegt die Schwermetallkonzentration in der Regel im Bereich von 5 bis 500 mg/l; in diesem Konzentrationsbereich eignet sich insbesondere eine Konzentration des Eisen(II)-Salzes in dem Teilstrom zwischen 2 und 200 mmol/l, besser zwischen 10 und 20 mmol/l. Der pH-Wert sinkt bei diesem Schritt im Normalfall unter 7.

Anschließend wird mittels eines alkalischen Mediums Eisenhydroxid ausgefällt. Das basische Medium kann ein Alkali- oder Erdalkalihydroxid oder Ammoniak sein. Der pH-Wert darf bei der Fällung des Eisenhydroxids nicht über 11,5 steigen; vorzugsweise wird die Fällung mit einer stöchiometrischen Menge des alkalischen Mediums vorgenommen. Es empfiehlt sich, im Anschluß an diesen Schritt eine Wartezeit von 5 bis 10 Minuten vorzusehen. Eine Wartezeit ist jedoch nicht unbedingt erforderlich.

Danach wird der Eisenhydroxid-Niederschlag durch Einleiten von Luft oxidiert. Während des Einleitens von Luft muß das Redox-Potential im Teilvolumen überwacht werden. Es ist entscheidend für den Erfolg des erfindungsgemäßen Verfahrens, daß das Einleiten von Luft abgebrochen wird, sobald das Redoxpotential gegen eine Silber/Silberchlorid-Referenzelektrode von sehr tiefen, negativen Werten auf ca. -200 mV bis ca. -100 mV angestiegen ist. Keinesfalls darf das Redox-Potential bis auf 0 mV (Kalomel-Referenzelektrode) bzw. ca. 40 mV (Silber/Silberchlorid-Referenzelektrode) ansteigen, wie in der oben genannten Druckschrift Wat. Sci. Tech. Vol 23, Kyoto, pp. 1893-1900, 1991 angegeben wird. Die Reaktion muß vor der vollständigen Oxidation des Niederschlags abgebrochen werden.

Vorzugsweise erfolgt das Einleiten von Luft mit einem solchen Luftstrom, daß das Redoxpotential von -200 mV bis -100 mV in ca. 20 bis 60 Minuten erreicht wird. Es empfiehlt sich zudem, die Sauerstoff-Konzentration im Teilvolumen zu überwachen und dafür zu sorgen, daß die Sauerstoff-Konzentration während des Einleitens von Luft in den ersten 10 Minuten nicht über 0,2 mg/l ansteigt. Ist das angegebene Redoxpotential erreicht, wird das Einleiten von Luft beendet.

Vorzugsweise unmittelbar anschließend, möglichst jedoch spätestens nach einer Stunde wird der Teilstrom wieder mit dem übrigen Abwasser vereinigt und durchmischt. Nunmehr wird das gesamte, in der angegebenen Weise vorbehandelte Abwasser mit einem alkalischen Medium, z. B. Natriumhydroxid, behandelt. Das alkalische Medium wird in einer solchen Menge zugegeben, daß der Fällungs-pH-Wert für die Schwermetalle überschritten wird und sich ein Niederschlag bildet. Der Niederschlag wird dann in bekannter Weise mit Hilfe eines magnetischen Filters entfernt.

Das erfindungsgemäße Verfahren kann vollständig bei Umgebungs- oder Raumtemperatur durchgeführt werden. Ein Aufheizen der Lösungen ist in keinem Verfahrensstadium notwendig.

Wie bereits erwähnt, weist das erfindungsgemäße Verfahren gegenüber dem Stand der Technik den Vorteil auf, daß erheblich geringere Mengen an Eisen(II)-Salzen benötigt werden. Dies wird erfindungsgemäß dadurch erreicht, daß ferro- und ferrimagnetische Partikel erzeugt werden, die zumindest zum Teil aus polykernigen Eisenhydroxiden bestehen und Schwermetalle besonders wirksam fällen. Die entscheidenden Verfahrensschritte, mit denen dieser Effekt erzielt wird, sind (i) die Herstellung der ferri- und ferromagnetischen Partikel in einem Teilvolumen des Abwassers und (ii) der Abbruch des Einleitens von Luft, bevor die vollständige Oxidation erfolgt ist.

Die erfindungsgemäß hergestellten ferri- und ferromagnetischen Partikel dienen beim beschriebenen Verfahren als "Keime", an denen der Fällvorgang einsetzt. Bei den bekannten Verfahren lagern sich dagegen wegen des größeren Verhältnisses von Eisen zu Schwermetall die Schwermetallionen adsorptiv an Magnetitpartikel an oder werden in das Kristallgitter eingebunden. Der geringere Bedarf an Eisen(II)-Salzen beim erfindungsgemäßen Verfahren ist hierdurch erklärbar. Die polykernigen Eisenhydroxide begünstigen beim erfindungsgemäßen Verfahren zusätzlich eine rasche Entstabilisierung des Abwassers, so daß eine schnelle und quantitative Flockung erreicht wird. Bei Einsatz leistungsfähiger Magnetfilter, wie z. B. Hockgradienten-Magnetfilter, sind die erreichbaren Flockenmagnetisierungen trotz des geringeren Eisen(II)-Gehaltes für eine effektive Abtrennung des Niederschlags ausreichend.

Die Erfindung wird im folgenden anhand von Ausführungsbeispielen und einer Figur näher erläutert.

In der Figur ist die in Beispiel 3 ermittelte Filterlaufzeit in [s] gegen die Ablauftrübung in Trübungseinheiten Formazin aufgetragen.

### Beispiel 1:

Für Versuche mit nickelhaltigem Abwasser wurden in einem Galvanikbetrieb Proben aus den Spülbädern entnommen. Die Zusammensetzung der Probenlösung ist in der folgenden Tabelle 1 angegeben.

**Tabelle 1**

| (Alle Konzentrationsangaben in [mg/l]) | | | |
|---|---|---|---|
| Ni: | 57 | Na: | 31 |
| Ca: | 2,2 | Fe: | 0,5 |
| Zn: | 2,9 | Cl⁻: | 26 |
| SO₄²⁻: | 156 | C_{org.}: | 5 |

Von 100 l einer solchen Probe wurde ein Teilvolumen von 2,5 l (2,5 %) entnommen. Zu diesem Teilvolumen wurden 12,45 g FeSO₄ · 7H₂O (entsprechend 2,5 g Fe) zugegeben. Die Eisen(II)-Sulfatmenge war so bemessen, daß nach der Rückvermischung des Teilstroms mit dem Hauptstrom das Eisen/Nickel-Verhältnis 1 : 2,3 betrug. Anschließend wurde zu dem Teilvolumen eine für Fe(II) und Ni stöchiometrische Menge (93.8 ml) an 1n NaOH zugegeben. Der pH-Wert betrug danach pH=10.5. Nach einer Wartezeit von 6 min wurde in das Teilvolumen Luft eingeblasen. Die Luftzufuhr erfolgte in Form von synthetischer Luft über eine Fritte, der Luftvolumenstrom betrug ca. 100 ml/min. Das Redoxpotential zum Zeitpunkt des Abbruchs des Lufteinblasens (nach 30 min) betrug -150 mV gegen eine Silber/Silberchlorid-Referenzelektrode.

Nach ca. 15 min wurde das Teilvolumen wieder mit der Hauptmenge der Probe vereinigt. Unter Einstellung einer Rührerdrehzahl von 100 U/min wurde das im Galvanikabwasser enthaltene Nickel bei pH = 11,4 als Ni(OH)₂ ausgefällt. Die im Teilvolumen erzeugten ferritischen Partikel wurden dabei in die entstehenden Hydroxidflocken eingeschlossen. Nach der pH-Einstellung wurde der Suspension noch 2 mg/l Flockungshilfsmittel zugegeben (P3 8723 der Firma Henkel). Zur Abtrennung des gebildeten Niederschlags stand ein Labor-HGMS-Filter mit einer maximalen Flußdichte von 1 Tesla zur Verfügung. Die Abscheidung erfolgte bei 0.6 Tesla und einer Filtergeschwindigkeit von 66 m/h. Das Filtervolumen des HGMS-Filters betrug 67 cm³. Im Ablauf des Filters wurde kontinuierlich die Trübung gemessen und in bestimmten Zeitabständen Proben entnommen. Trotz des kleinen Volumens des Versuchsfilters konnte über eine Versuchszeit von 10 min eine Trübung kleiner 0.5 TEF (Trübungseinheiten Formazin) registriert werden. Die Konzentrationsmessungen im Ablauf ergaben Nickelkonzentrationen von kleiner 0,4 mg/l.

### Beispiel 2:

Für Versuche mit zinkhaltigem Abwasser wurden der Fließspüle einer Verzinkung Proben entnommen. Die Zusammensetzung der Probenlösung zeigt folgende Tabelle 2:

**Tabelle 2**

| (Alle Konzentrationsangaben in [mg/l]) | | | |
|---|---|---|---|
| Zn: | 92 | Na: | 24 |
| Ca: | 28,6 | K: | 462 |
| Mg: | 6,3 | Cl⁻: | 605 |
| SO₄²⁻: | 20,6 | | |

Von 20 l einer solchen Probe wurde ein Teilvolumen von 1,2 l (6 %) entnommen. Zu diesem Teilvolumen wurden 4g FeSO₄ · 7H₂O (entsprechend 0,8 g Fe) zugegeben. Die Eisen(II)-Sulfatmenge war so bemessen, daß nach der Rückvermischung des Teilstroms mit dem Hauptstrom das Eisen/Zink-Verhältnis 1 : 2.3 betrug. Anschließend wurde zu dem Teilvolumen eine für Fe(II) und Zn stöchiometrische Menge (56 ml) an 1n NaOH zugegeben. Der pH-Wert betrug danach pH = 11,2. Nach einer Wartezeit von 6 min wurde in das Teilvolumen Luft eingeblasen. Die Luftzufuhr erfolgte in Form von synthetischer Luft über eine Fritte; der Luftvolumenstrom betrug ca. 120 ml/min. Das Redoxpotential zum Zeitpunkt des Abbruchs des Lufteinblasens (nach ca. 25 min) betrug -100 mV gegen eine Silber/Silberchlorid-Referenzelektrode.

Nach ca. 15 min wurde das Teilvolumen wieder mit der Hauptmenge der Probe vereinigt. Unter Einstellung einer Rührerdrehzahl von 100 U/min wurde das zinkhaltige Abwasser bei pH = 9,5 als Zn(OH)₂ ausgefällt. Die im Teilvolumen erzeugten ferritischen Partikel wurden dabei in die entstehenden Hydroxidflocken eingeschlossen. Nach der pH-Einstellung wurde der Suspension noch 1 mg/l Flockungshilfsmittel zugegeben (P3 8723 der Firma Henkel). Zur Abtrennung des gebildeten Niederschlags stand ein Labor-HGMS-Filter mit einer maximalen Flußdichte von 7 Tesla zur Verfügung. Die Abscheidung erfolgte bei einer mittleren Flußdichte von 5 Tesla und einer Filtergeschwindigkeit von 66 m/h. Das Filtervolumen des HGMS-Filters betrug 67 cm³. Im Ablauf des Filters wurden im Abstand von 60 s Proben entnommen. Wie Tabelle 3 zeigt, wurden dabei für einen Zeitraum von 360 s Zinkkonzentrationen erreicht, die weit unterhalb des Einleitungsgrenzwerts von 2 mg/l liegen. Die Messung der Konzentrationen erfolgte mittels Atomabsorptionsspektroskopie.

**Tabelle 3**

| Zinkablaufkonzentrationen bei einem Experiment zur Reinigung von zinkhaltigem Galvanikabwasser | | |
|---|---|---|
| Zeit in [s] | Zinkkonzentration im Filtrat in [mg/] | Eisenkonzentration im Filtrat in [mg/l] |
| 60 | 0,70 | 0,05 |
| 120 | 0,54 | 0,11 |
| 180 | 0,37 | 0,03 |
| 240 | 0,34 | 0,03 |
| 300 | 0,33 | 0,03 |
| 360 | 0,32 | 0,03 |
| 420 | 20,80 | 8,58 |
| 480 | 50,96 | 21,84 |

### Beispiel 3:

Versuche mit einem kupferhaltigem Modellwasser (50 mg/l Cu in Form von CuSO₄ in Karlsruher Leitungswasser):

Von 25 l des Modellwassers wurde ein Teilvolumen von 2.5 l (10 %) entnommen. Zu diesem Teilvolumen wurden 6,2 g FeSO₄ · 7H₂O (entsprechend 1,25 g Fe) zugegeben. Die Eisen(II)-Sulfatmenge war so bemessen, daß nach der Rückvermischung des Teilstroms mit dem Hauptstrom das Eisen/Kupfer-Verhältnis 1 : 1 betrug.

Anschließend wurde zu dem Teilvolumen eine für Fe(II) und Cu stöchiometrische Menge (48,7 ml) an 1n NaOH zugegeben. Der pH-Wert betrug danach pH = 11,1. Nach einer Wartezeit von 6 min wurde in das Teilvolumen Luft eingeblasen. Die Luftzufuhr erfolgte in Form von synthetischer Luft über eine Fritte, der Luftvolumenstrom betrug ca. 60 ml/min. Das Redoxpotential zum Zeitpunkt des Abbruchs des Lufteinblasens (nach ca. 30 min) betrug -150 mV gegen eine Silber/Silberchlorid-Referenzelektrode.

Nach ca. 15 min wurde das Teilvolumen wieder mit der Hauptmenge der Probe vereinigt. Unter Einstellung einer Rührerdrehzahl von 100 U/min wurde das kupferhaltige Modellwasser bei pH = 9,3 als Cu(OH)₂ ausgefällt. Die im Teilvolumen erzeugten ferritischen Partikel wurden dabei in die entstehenden Hydroxidflocken eingeschlossen. Der Versuch erfolgte ohne die Zugabe von Flockungshilfsmittel. Zur Abtrennung des gebildeten Niederschlags stand ein Labor-HGMS-Filter mit einer maximalen Flußdichte von 1 Tesla zur Verfügung. Die Abscheidung erfolgte bei 0,6 Tesla und einer Filtergeschwindigkeit von 66 m/h. Das Filtervolumen des HGMS-Filters betrug 67 cm³. Im Ablauf des Filters wurden im Abstand von 60 s Proben entnommen und kontinuierlich die Trübung gemessen. Wie die Auftragung der Trübung in der Figur zeigt, konnte während einer Filterlaufzeit von über 350 s eine vollständige Entfernung der Trübung erreicht werden. Die Analyse der Ablaufproben mittels Atomadsorptionsspektroskopie ergab Kupferkonzentrationen < 0.4 mg/l.

## Patentansprüche

1. Verfahren zur Abtrennung von Schwermetallen aus Abwasser, bei dem man
a) dem Abwasser ein Teilvolumen entnimmt,
b) in dem Teilvolumen suspendierte ferri- und ferromagnetische Partikel herstellt, indem man
- ein Eisen(II)-Salz löst,
- mit einem alkalischen Medium das gelöste Eisen(II)-Salz in einer Weise ausfällt, daß sich der pH-Wert nicht über 11,5 erhöht,
- in den Teilstrom oder das Teilvolumen so lange Luft einleitet, bis sich das Redox-Potential gegen eine Silber/Silberchlorid-Referenzelektrode in der wäßrigen Lösung auf -200 mV bis -100 mV erhöht,
b) den Teilstrom oder das Teilvolumen wieder mit dem Abwasser vereinigt,
c) ein alkalisches Medium in einer solchen Menge zugibt, daß der Fällungs-pH-Wert für die Schwermetalle überschritten wird und sich ein Niederschlag bildet,
d) den Niederschlag in einem Magnetfilter abtrennt.

2. Verfahren nach Anspruch 1, bei dem man zwischen 0,5 Vol.-% und 20 Vol.-% des Abwassers als Teilvolumen entnimmt.

3. Verfahren nach Anspruch 1 oder 2, bei dem die in dem Teilvolumen suspendierten ferri- und ferromagnetischen Partikel hergestellt werden, indem man 2 bis 200 mmol/l des Eisen(II)-Salzes löst.

4. Verfahren nach Anspruch 1, 2 oder 3, bei dem die in dem Teilvolumen suspendierten ferri- und ferromagnetischen Partikel hergestellt werden, indem man das alkalische Medium in zur Ausfällung von Eisen(II)-Hydroxid stöchiometrischer Menge einsetzt.

5. Verfahren nach einem der Ansprüche 1 bis 4, bei dem die in dem Teilvolumen suspendierten ferri- und ferromagnetischen Partikel hergestellt werden, indem man nach der Ausfällung des gelösten Eisen(II)-Salzes 5 bis 10 Minuten wartet, bevor man die Luft einleitet.

6. Verfahren nach einem der Ansprüche 1 bis 5, bei dem die in dem Teilvolumen suspendierten ferri- und ferromagnetischen Partikel hergestellt werden, indem man die Luft während eines Zeitraumes von 20 bis 60 Minuten einleitet und in den ersten 10 Minuten die Sauerstoffkonzentration unter 0,2 mg/l hält.

## Claims

1. Method of separating heavy metals from waste water, wherein
a) a partial volume is removed from the waste water;
b) ferri- and ferromagnetic particles, suspended in the partial volume, are produced when
- an iron(II) salt is dissolved;
- the dissolved iron(II) salt precipitates with an alkaline medium in such a manner that the pH value does not rise above 11.5;
- air is introduced into the partial stream or into the partial volume until the redox potential increases to between -200 mV and -100 mV relative to a silver/silver chloride reference electrode in the aqueous solution;
b) the partial stream or the partial volume is combined again with the waste water;
c) an alkaline medium is added in such a quantity that the precipitation pH value for the heavy metals is exceeded, and a precipitate is formed;
and
d) the precipitate is separated in a magnetic filter.

2. Method according to claim 1, wherein between 0.5 % by vol. and 20 % by vol. of the waste water is removed as the partial volume.

3. Method according to claim 1 or 2, wherein the ferri- and ferromagnetic particles, suspended in the partial volume, are produced when 2 to 200 mmol/l of the iron(II) salt are dissolved.

4. Method according to claim 1, 2 or 3, wherein the ferri- and ferromagnetic particles, suspended in the partial volume, are produced when the alkaline medium is used in a quantity which is stoichiometrical for the precipitation of iron(II) hydroxide.

5. Method according to one of claims 1 to 4, wherein the ferri- and ferromagnetic particles, suspended in the partial volume, are produced when, after the precipitation of the dissolved iron(II) salt, there is a waiting period of between 5 and 10 minutes before the air is introduced.

6. Method according to one of claims 1 to 5, wherein the ferri- and ferromagnetic particles, suspended in the partial volume, are produced when the air is introduced during a period of between 20 and 60 minutes, and the oxygen concentration is kept below 0.2 mg/l in the first 10 minutes.

## Revendications

1. Procédé de séparation de métaux lourds des eaux usées, dans lequel :
a) on prélève un volume partiel d'eaux usées,
b) des particules ferri- et ferromagnétiques en suspension dans le volume partiel sont produites, en
- dissolvant un sel ferreux,
- précipitant avec un milieu alcalin le sel ferreux dissout de manière que la valeur du pH n'augmente pas au-delà de 11,5,
- introduisant dans le courant partiel ou le volume partiel de l'air, jusqu'à ce que le potentiel Redox contre une électrode de référence en argent/chlorure d'argent s'élève à -200 mV jusqu'à -100 mV.
c) on réunit à nouveau le courant partiel ou le volume partiel avec des eaux usées,
d) on ajoute un milieu alcalin en une quantité telle, que la valeur du pH de précipitation pour les métaux lourds soit dépassée et qu'il se forme un précipité,
e) on élimine le précipité dans un filtre magnétique.

2. Procédé selon la revendication 1,
dans lequel
on prélève entre 0,5 % en volume et 20 % en volume des eaux usées comme volume partiel.

3. Procédé selon les revendications 1 ou 2,
dans lequel
les particules ferri- et ferromagnétiques en suspension dans le volume partiel sont produites, en dissolvant de 2 à 200 mmol/l de sel ferreux.

4. Procédé selon les revendications 1, 2 ou 3,
dans lequel
les particules ferri- et ferromagnétiques en suspension dans le volume partiel sont produites, en introduisant le milieu alcalin en quantité stoechiométrique pour la précipitation d'hydroxyde ferreux (Fer (II)).

5. Procédé selon une des revendications 1 à 4,
dans lequel
les particules ferri- et ferromagnétiques en suspension dans le volume partiel sont produites, en attendant après la précipitation du sel ferreux (Fer (II)) dissout 5 à 10 minutes, avant d'insuffler l'air.

6. Procédé selon une des revendications 1 à 5,
dans lequel
les particules ferri- et ferromagnétiques en suspension dans le volume partiel sont produites en introduisant l'air pendant une durée de 20 à 60 minutes et en maintenant dans les 10 premières minutes la concentration d'oxygène en dessous de 0,2 mg/l.
